# EUROPEAN PATENT SPECIFICATION

(11) **EP 4 129 073 B1**
(45) Date of publication and mention of the grant of the patent: **06.05.2026**
(21) Application number: 21774854.0
(22) Date of filing: 26.03.2021
(51) Int. Cl.: A23C 11/10, A23C 20/02, A23L 11/50, A23L 11/65

(54) **METHOD FOR PRODUCING PLANT-BASED FERMENTED MILK**
VERFAHREN ZUR HERSTELLUNG VON FERMENTIERTER MILCH AUF PFLANZENBASIS
PROCÉDÉ DE PRODUCTION DE LAIT FERMENTÉ À BASE DE PLANTES

(30) Priority: 26.03.2020 JP 2020055391
(43) Date of publication of application: 08.02.2023
(73) Proprietor: Fuji Oil Co., Ltd., Izumisano-shi, Osaka 598-8540 (JP)
(72) Inventor: IKENAGA, Naoya, Izumisano-shi, Osaka 598-8540 (JP); OUE, Yuna, Izumisano-shi, Osaka 598-8540 (JP); YANAGISAWA, Masanobu, Izumisano-shi, Osaka 598-8540 (JP)
(74) Representative: Becker, Eberhard
(86) International application number: PCT/JP2021/012765
(87) International publication number: WO 2021/193890

(56) References cited:
- JP-A- 2012 050 392
- JP-A- 2014 233 261
- JP-A- H08 238 066
- JP-A- S59 132 856
- JP-B2- 5 879 997
- US-A- 5 972 394
- US-A1- 2015 296 823
- US-B2- 10 299 490

## Description

### [Technical Field]

The present invention relates to a method for producing a plant-based fermented milk.

### [Background Art]

Milk raw materials, such as cow's milk, fresh cream, and skim milk powder, have a unique milk flavor and are thus preferred. Meanwhile, against the background such as the increase in lifestyle-related diseases due to excessive intake of animal fats, the increase in milk allergic patients due to excessive intake of milk products, the rise of health consciousness, and soaring of prices of milk raw materials due to concerns about supply shortages caused by a population increase, there is an increasing trend worldwide to use plant-based raw materials that can be substituted for milk raw materials.

Under such circumstances, as substitutes for milk-fermented foods such as yogurt and cheese, soy milk-based fermented foods have been researched and developed for some time, and a relatively large number of products thereof are also being sold on the market. Moreover, recently, in addition to soy milk, products based on other plant-based milks such as coconut milk and almond milk have also begun to be sold all over the world, and the market for plant-based fermented milks has an expanding trend worldwide.

Meanwhile, in the case of lactic acid fermentation based on oil-containing plant-based milks such as soy milk and coconut milk, a unique unpleasant deteriorated odor is generated over time compared to fermented foods based on milk raw materials, and even if the milk raw materials are partially replaced, the deteriorated flavor has a great influence on the quality of the whole product. Plant-based milks may have a fresh and favorable fermented flavor, like yogurt and cheese, immediately after fermenting the plant-based milks, but the flavor may not be maintained, and the flavor may deteriorate over time, or the flavor may deteriorate due to a heat sterilization treatment after fermentation.

In order to deal with such a problem, as described in, for example, Patent Literature 1 to Patent Literature 4 and the like, an advanced manufacturing technique, such as performing fermentation by combining specific lactic acid bacteria, performing fermentation under anoxic conditions, or performing filling into a container with extremely low oxygen permeability after fermentation, is required in the related art.

Patent Literature 5 discloses a milk substitute composition containing a component derived from soybean, and a milk substitute food and drink using the same.

In Patent Literature 6 a process for manufacturing a solid fermented soy milk product, comprising a fermentation step in which a fermentation substrate containing soy milk and with adjusted malic acid and free amnio acid concentrations, is fermented with heterofermentative lactic acid bacteria is described.

Patent Literature 7 discloses a method of preparing a fermented soybean milk comprising subjecting a soybean milk to fermentations with yeast and lactic acid bacteria, and subjecting the resulting fermented soybean milk to a deactivation treatment to deactivate the yeast and bacteria by heating and a removal treatment to remove alcohol and carbon dioxide gas contained therein. As a result, a fermented soybean milk which is a beverage suiting everybody's taste and a packed product thereof which is not subject to expansion or deformation during storage, are obtained.

In Patent Literature 8 a method for producing a soymilk fermentation product, comprising an enzyme treatment step of hydrolyzing soy milk with a peptide bond hydrolase to obtain fermentation substrate, and a fermentation step of fermenting the fermentation substrate with lactic acid bacteria to obtain a fermentation product is described.

### [Citation List]

### [Patent Literature]

[Patent Literature 1]
   Japanese Patent No. 3307255
[Patent Literature 2]
   Japanese Patent No. 3327155
[Patent Literature 3]
   Japanese Patent No. 3498551
[Patent Literature 4]
   Japanese Patent Laid-Open No. 11-75688
[Patent Literature 5]
   JP 5 879997 B2
[Patent Literature 6]
   US 2015/296823 A1
[Patent Literature 7]
   US 5 972 394 A
[Patent Literature 8]
   US 10 299 490 B2

### [Summary of Invention]

### [Technical Problem]

The generation of an unpleasant deteriorated odor can be suppressed to a certain degree by the techniques of Patent Literature 1 to Patent Literature 4, but there was a problem of lack of versatility due to various restrictions, such as not being applicable to bacterial strains of specific lactic acid bacteria having a preferable physiological function, and requiring a large investment in novel fermentation equipment.

In view of such circumstances, the present invention addresses the problem of providing a method for producing a plant-based fermented milk that is highly versatile regardless of the type of microorganisms, such as lactic acid bacteria, and the status of production equipment and has little deterioration in flavor after fermentation.

### [Solution to Problem]

As a result of intensive studies, the present inventors have found that the problems can be solved by a method for producing a plant-based fermented milk according to claim 1.

That is, the present invention is defined by the appended claims.

### [Advantageous Effects of Invention]

Using the specific peptide mixture, which is used in the present invention, as a fermentation raw material for a plant-based fermented milk can suppress the generation of a deteriorated odor over time after fermentation and impart a favorable fermented flavor. Accordingly, the plant-based fermented milk used in the present invention has an excellent flavor even without using the special techniques described in the aforementioned known technique, and even if the type of lactic acid bacteria or yeast or the production equipment, which is used in the production of fermented milk products or fermented beverages, such as ordinary yogurt, lactic acid bacteria beverages, fermented butter, and cheese, is used, a plant-based fermented milk having an excellent flavor immediately after fermentation and excellent stability of the flavor over time can be produced.

### [Description of Embodiments]

### (Plant-based fermented milk)

The plant-based fermented milk in the present invention refers to a milk obtained by subjecting a plant-based milk (emulsified liquid), which is obtained by using a plant-based raw material as a basic raw material, to fermentation with microorganisms, such as lactic acid fermentation. The product form may be a solid, pasty, or liquid yogurt-like or cheese-like product. Here, the "plant-based" in the present specification does not mean that animal-based raw materials are not contained at all, and specifically means that the content of animal-derived raw materials is less than 50% by weight with respect to the total weight of raw materials. In a more preferred aspect, the content of animal-derived raw materials may be 40% by weight or less, 30% by weight or less, 20% by weight or less, 10% by weight or less, or 0% by weight, with respect to the total weight of raw materials.

### (Fermentation raw material)

### ▪ Plant-based milk

One of the fermentation raw materials according to the present invention is a plant-based milk. The plant-based milk is not limited as long as the milk is a plant-based milk prepared by using a plant as a basic raw material. Specifically, soy milk, coconut milk, almond milk, hemp milk, oat milk, rice milk, hazelnut milk, and the like are included. The lipid content in the plant-based milk is not limited, but a higher lipid content is more likely to exhibit the effects of the present invention, and the lipid content is preferably 5% by weight or greater and more preferably 10% by weight or greater, with respect to the solid content of the plant-based milk. The plant-based milk may contain fiber components in a plant.

### ▪ Lipid

The fermentation raw material according to the present invention contains a lipid. The lipid may be a lipid derived from a plant-based milk, or may be an oil or fat added separately from a plant-based milk. When an oil or fat is added separately, the oil or fat is preferably a plant-based oil or fat. A higher lipid content in the fermentation raw material is more likely to exhibit the effects of the present invention. Specifically, the content may be 5% by weight or greater, 10% by weight or greater, or 15% by weight or greater, and 80% by weight or less, 75% by weight or less, or 70% by weight or less, with respect to the solid content of the fermentation raw material.

### ▪ Protein hydrolyzate

One of the fermentation raw materials according to the present invention is a protein hydrolyzate. The protein hydrolyzate refers to a composition obtained by hydrolyzing a protein raw material with an enzyme or an acid.

The protein raw material is a raw material containing at least a protein regardless of the origin thereof. Either a plant-based protein or an animal-based protein can be selected, but it is preferable to select a plant-based protein from the viewpoint of producing a plant-based fermented milk. Examples of the plant-based protein raw material include natural raw materials such as wheat and barley, beans, grains, and malt, and a soybean protein, a pea protein, a green bean protein, a wheat protein, a rice protein, a hemp protein, a nut protein, and a malt extract, which are obtained by concentrating proteins from natural raw materials. Proteins derived from casein, whey, collagen, a yeast extract, and the like can be used as the animal-based protein.

It is important that the protein hydrolyzate in the present invention contain at least 3% by weight of free amino acids. Moreover, the hydrolyzate may contain at least 5% by weight, at least 7% by weight, at least 10% by weight, at least 15% by weight, at least 20% by weight, or at least 25% by weight of free amino acids. Meanwhile, the hydrolyzate may contain at most 35% by weight, at most 30% by weight, or at most 25% by weight of free amino acids.

When the protein hydrolyzate contains free amino acids in the aforementioned appropriate range, in combination with a peptide fraction, the generation of a deteriorated odor over time after fermentation can be effectively suppressed. When the content of the free amino acids in the protein hydrolyzate is too high, the flavor of the amino acids themselves is strong, which is not preferable.

Furthermore, the content of the free amino acids can be calculated by liquid chromatography-mass spectrometry (LC/MS).

In addition, the protein hydrolyzate in the present invention preferably has a degree of hydrolysis of 90% or greater. Moreover, the degree of hydrolysis may be 95% or greater, 98% or greater, or 100%. Here, the degree of hydrolysis is expressed as a 15% trichloroacetic acid solubility rate (TCA solubility rate), and the higher the numerical value, the lower the molecular weight of the protein hydrolyzate. The generation of a deteriorated odor over time after fermentation can be more effectively suppressed by using a degradation product having a degree of hydrolysis in such a range.

Furthermore, the 15% TCA solubility rate is calculated as the ratio of the amount of a crude protein in the supernatant, which is obtained after adding 30% by weight of trichloroacetic acid (TCA) in an equivalent amount to a 1% by weight aqueous solution of a protein hydrolyzate sample and centrifuging the resultant at 3,000 rpm for 10 minutes, to the amount of all crude proteins separately measured. Moreover, the amount of the crude proteins is measured by the Kjeldahl method.

In the present invention, the protein hydrolyzate is added in an amount of 0.1 to 2% by weight with respect to the solid content of the fermentation raw material. Therefore, the generation of a deteriorated odor over time after fermentation can be effectively suppressed.

The lower limit of the added amount may be 0.11% by weight or greater, 0.12% by weight or greater, 0.13% by weight or greater, 0.14% by weight or greater, or 0.145% by weight or greater. In a more preferred aspect, the lower limit of the added amount may also be 0.2% by weight or greater, 0.25% by weight or greater, 0.28% by weight or greater, or 0.3% by weight or greater.

Moreover, the upper limit of the added amount may be 1.8% by weight or less (not according the invention), 1.6% by weight or less ( not according the invention), 1.4% by weight or less, 1.3% by weight or less, 1.2% by weight or less, 1.1% by weight or less, 1% by weight or less, 0.98% by weight or less, or 0.96% by weight or less.

### ▪ Assimilable saccharides

It is not essential to add, as the fermentation raw material according to the present invention, assimilable saccharides serving as a nutrient source for lactic acid bacteria, but it is preferable to add assimilable saccharides when fermentation is difficult to proceed. For example, glucose, fructose, sucrose, maltose, galactose, lactose, raffinose, trehalose, soybean oligosaccharide, fructooligosaccharide, xylooligosaccharide, and the like can be used. The saccharide raw material may be used alone, or two or more kinds thereof may be used in combination. When the assimilable saccharides are added, the blending amount of the assimilable saccharides is appropriately 1 to 50% by weight and preferably 5 to 40% by weight with respect to the solid content of the fermentation raw material.

### ▪ Other fermentation raw materials

As the fermentation raw materials according to the present invention, starch, thickening polysaccharides, a gelling agent, an emulsifier, a flavoring, an acidulant, an antioxidant, a chelating agent, and the like can be appropriately added, if necessary, in addition to the aforementioned raw materials.

### (Fermentation with microorganisms)

The microorganisms used in the fermentation according to the present invention are not particularly limited as long as the microorganisms are generally used for producing a fermented food, and, for example, lactic acid bacteria, bifidobacteria, yeast, aspergillus, natto bacteria, and tempeh bacteria can be used alone or in combination as appropriate. In an aspect, it is preferable to use lactic acid bacteria. In another aspect, it is preferable to use lactic acid bacteria and yeast. In still another aspect, it is preferable to use diacetyl-producing bacteria as the microorganisms in order to increase the diacetyl content in the plant-based fermented milk. Diacetyl-producing lactic acid bacteria or yeast can be used as the diacetyl-producing bacteria.

### (Lactic acid bacteria)

In the present invention, the lactic acid bacteria (including bifidobacteria) used in the lactic acid fermentation are not particularly limited as long as the lactic acid bacteria are used for fermented milk products such as ordinary yogurt, lactic acid bacteria beverages, or cheese.

Examples of the type of lactic acid bacteria include the genus Lactobacillus such as Lactobacillus casei, Lactobacillus plantarum, Lactobacillus helveticus, and Lactobacillus bulgaricus, the genus Streptococcus such as Streptococcus thermophilus, Streptococcus lactis, and Streptococcus diacetilactis, the genus Lactococcus such as Lactococcus lactis subspecies lactis, Lactococcus lactis subspecies lactis biovar diacetylactis, and Lactococcus lactis subspecies cremoris, the genus Leuconostoc such as Leuconostoc mesenteroides subspecies cremoris and Leuconostoc lactis, and the genus Bifidobacterium such as Bifidobacterium bifidum, Bifidobacterium longum, Bifidobacterium infantis, and Bifidobacterium breve. Moreover, a starter, such as kefir bacteria, in which microorganisms such as yeast other than lactic acid bacteria are mixed can also be used. Furthermore, a combination of two or more kinds of these lactic acid bacteria can also be arbitrarily used.

In addition, specific bacterial strains, which are used in commercially available yogurt or lactic acid bacteria beverages or known, such as Lactobacillus casei (YIT 9029 strain (Shirota strain), YIT10003 strain, NY1301 strain, and SBR1202 strain), Lactobacillus mari YIT0243 strain, Lactobacillus acidophilus (SBT-2062 strain and CK92 strain), Lactobacillus helveticus CK60 strain, Lactobacillus gasseri (SP strain (SBT2055SR), LG21 strain, LC1 strain, OLL 2716 strain, FERMP-17399, and the like), Lactobacillus delbrueckii subspecies bulgaricus (OLL 1023 strain, OLL 1029 strain, OLL 1030 strain, OLL 1043 strain, OLL 1057 strain, OLL 1073R-1 strain, OLL 1075 strain, OLL 1083 strain, OLL 1097 strain, OLL 1104 strain, OLL 1162 strain, and 2038 strain), Lactobacillus johnsonii La1 strain (LC1 strain), Lactobacillus GG strain, Streptococcus thermophilus (1131 strain and OLS 3059 strain), Bifidobacterium breve (Yakult strain and YIT4065 strain), Bifidobacterium bifidum (Yakult strain), Bifidobacterium longum (SP strain (SBT2928), BB536 strain, BE80 strain, and FERM BP-7787 strain), and Bifidobacterium lactis (FK120 strain, LKM512 strain, and Bb-12 strain) can also be suitably used.

### (Yeast)

As the yeast, in addition to yeast (Saccharomyces cerevisiae) used for fermentation of bread and the like, for example, yeast derived from sourdough (San Francisco sourdough, rye sourdough, panettone yeast, and the like), hop yeast, beer yeast, alcohol yeast, or fruit yeast (grape fruit yeast, apple fruit yeast, and the like), which is used as leaven, can be used. In an aspect, Kluyveromyces marxianus can be used.

### (Aspergillus)

As the aspergillus, the genus Aspergillus such as Aspergillus oryzae, Aspergillus niger, Aspergillus sojae, Aspergillus kawachi, and Aspergillus awamori, the genus Monascus such as Monascus anka and Monascus purpureus, the genus Neurospora, the genus Rhizopus such as Rhizopus javanicus, the genus Mucor such as Mucor rouxii, and the like can be used without limitation.

### (Tempeh bacteria)

As the tempeh bacteria, the genus Rhizopus such as Rhizopus oligosporus and Rhizopus oryzae can be used.

### (Fermentation conditions)

The fermentation conditions are not particularly limited as long as the microorganisms used can grow.

When lactic acid bacteria are used, the conditions for lactic acid fermentation can be appropriately changed according to the type of lactic acid bacteria used. In an aspect in which diacetyl-producing bacteria are used in order to increase the diacetyl content in the plant-based fermented milk, aeration and/or stirring can be performed as needed. When the diacetyl content in the plant-based fermented milk is increased, the plant-based fermented milk can be more effectively used in plant-based fermented butter or cheese. The fermentation temperature for lactic acid bacteria may be, for example, 20°C to 50°C and preferably 25°C to 45°C. Moreover, in the case of cheese, lactic acid bacteria can also be fermented at a slightly lower temperature of 10°C to 50°C and preferably 15°C to 45°C. The fermentation time may be, for example, 4 to 72 hours and preferably 5 to 60 hours. The lactic acid fermentation can be performed until the pH of the fermentation raw material is lowered to 3 to 6 and, if necessary, 3 to 5, and after the fermentation is completed, the pH can also be finely adjusted to a desired pH, as appropriate, with an alkali, an organic acid, an inorganic acid, or the like. As the fermentation device, a device similar to those used when producing yogurt or cheese of milk can be used.

When yeast is used, the fermentation temperature may be, for example, 8°C to 40°C, preferably 15°C to 35°C, and more preferably 20°C to 28°C. The fermentation time may be, for example, 12 hours to 10 days, preferably 16 hours to 5 days, and more preferably 3 days (about 72 hours) to 5 days. Moreover, the fermentation can be performed under aerobic conditions in order to keep the ethanol concentration low, and as needed, sufficient aeration and/or stirring can be performed for yeast fermentation.

### (Steps after fermentation)

After the fermentation step such as lactic acid fermentation, the resultant is subjected to a filtration step, a homogenization step, and a heat sterilization step, if necessary, and can be prepared into a solid, pasty, or liquid yogurt-like product by a conventional method. Moreover, the resultant can also be prepared into a solid or pasty cheese-like product by a conventional method.

### Example

Examples will be shown below, and the details of the present invention will be described in more detail. Moreover, both "part" and "%" in the examples indicate a weight basis.

### (Comparative Example 1) Basic blending

98.99 parts of "soy milk cream" (produced by FUJI OIL CO., LTD., total solid content of 19.8%, protein content of 5.6%, and lipid content of 12.3%) as a plant-based milk, and 1 part of glucose were mixed to make 99.99 parts, and the resultant was blended with a homomixer for 30 minutes and then homogenized at a homogenization pressure of 50 kg/cm². 0.01 parts of Streptococcus thermophilus, as lactic acid bacteria, was added thereto, and the resultant was subjected to lactic acid fermentation at 37°C until the pH was lowered to 4.7. After the fermentation was completed, the resultant was sterilized at 80°C for 2 minutes to obtain a pasty fermented soy milk.

### (Examples 1 to 5 and Comparative Examples 2 to 5) Addition and added amount of protein hydrolyzate

Fermented soy milks were prepared in the same manner as in Comparative Example 1 by using the blending of Comparative Example 1 as a base and adding the protein hydrolyzates selected in Table 1 as a fermentation raw material, and the effect of the addition of each hydrolyzate was checked. The blending amounts of the respective hydrolyzates are as shown in Tables 2 and 3, and the blending amounts of soy milk cream and other plant-based milks were reduced by the same weight as the blending amount of each hydrolyzate.

The effect of the addition was checked by asking five taste panelists skilled in the field of fermented milks to perform a sensory evaluation at the timings when the obtained fermented soy milk was refrigerated at 5°C for 1 day and 7 days. The scores of the sensory evaluation were given from 1 point to 5 points by consensus of the panelists according to the following evaluation criteria.

**(Table 1) Selected protein hydrolyzate**

| Product name | Origin | Content of free amino acids | Producer |
|---|---|---|---|
| HINUTE-HKB | Soybean | About 25% | FUJI OIL CO., LTD. |
| HINUTE-AM | Soybean | About 2% | FUJI OIL CO., LTD. |
| TYPE-S | Fish | 10.3% | Nitta Gelatin Inc. |
| HWP 117 | Milk whey | 4.0% | TATUA |
| Mixture of equivalent amounts of 20 amino acids | - | 100% | NIPPON RIKA Co., LTD. |
| Mixture that reproduces composition of free amino acids in HINUTE-HKB | - | 100% | NIPPON RIKA Co., LTD. |

| | | | |
|---|---|---|---|
| * All of the products have a 15% TCA solubility rate of almost 100%. | | | |

**(Table 2)**

| | | Comparative Example 1 | Example 1 | Example 2 | Example 3 | Comparative Example 2 |
|---|---|---|---|---|---|---|
| Soy milk cream | | 98.99 | 98.79 | 98.93 | 98.96 | 98.98 |
| Glucose | | 1 | 1 | 1 | 1 | 1 |
| HINUTE-HKB | | - | 0.2 | 0.06 | 0.03 | 0.01 |
| Lactic acid bacteria | | 0.01 | 0.01 | 0.01 | 0.01 | 0.01 |
| Total | | 100 | 100 | 100 | 100 | 100 |
| Solid content of fermentation raw material (in whole) | | 20.60 | 20.76 | 20.65 | 20.62 | 20.61 |
| Content of protein hydrolyzate (% in solid content) | | 0 | 0.963 | 0.291 | 0.145 | 0.049 |
| Lipid | In whole | 12.18 | 12.15 | 12.17 | 12.17 | 12.17 |
| | In solid content | 59.10 | 58.53 | 58.93 | 59.02 | 59.08 |
| Sensory evaluation | After storage for 1 day at 5°C | 2 | 5 | 5 | 4 | 3 |
| | After storage for 7 days at 5°C | 1 | 5 | 4 | 4 | 2 |

### (Evaluation criteria)

5 points: The fermented soy milk has a very favorable fermented flavor without any deteriorated odor.
4 points: The fermented soy milk has a favorable fermented flavor with almost no deteriorated odor.
3 points: The fermented soy milk has a slightly deteriorated odor and a not very favorable flavor.
2 points: The fermented soy milk has a more deteriorated odor and a bad flavor.
1 point: The fermented soy milk has the most deteriorated odor and a very bad flavor.

**(Table 3)**

| | | Comparative Example 3 | Example 4 | Example 5 | Comparative Example 4 | Comparative Example 5 |
|---|---|---|---|---|---|---|
| Soy milk cream | | 98.79 | 98.79 | 98.79 | 98.94 | 98.94 |
| Glucose | | 1 | 1 | 1 | 1 | 1 |
| HINUTE-AM | | 0.2 | - | - | - | - |
| TYPE-S | | - | 0.2 | - | - | - |
| HWP117 | | - | - | 0.2 | - | - |
| Mixture of equivalent amounts of 20 amino acids | | - | - | - | 0.05 | - |
| Mixture that reproduces composition of free amino acids in HINUTE-AM | | - | - | - | - | 0.05 |
| Lactic acid bacteria | | 0.01 | 0.01 | 0.01 | 0.01 | 0.01 |
| Total | | 100 | 100 | 100 | 100 | 100 |
| Solid content of fermentation raw material (in whole) | | 20.76 | 20.76 | 20.76 | 20.64 | 20.64 |
| Content of protein hydrolyzate (% in solid content) | | 0.963 | 0.963 | 0.963 | 0.242 | 0.242 |
| Lipid | In whole | 12.15 | 12.15 | 12.15 | 12.17 | 12.17 |
| | In solid content | 58.53 | 58.53 | 58.53 | 58.96 | 58.96 |
| Sensory evaluation | After storage for 1 day at 5°C | 3 | 5 | 4 | 3 | 3 |
| | After storage for 7 days at 5°C | 2 | 4 | 4 | 2 | 2 |

### (Consideration)

In light of the results in Tables 2 and 3, adding, as a fermentation raw material, a specific amount of a protein hydrolyzate containing a relatively large amount of the free amino acids can suppress deterioration in the flavor of the plant-based fermented milk during fermentation and during storage after fermentation.

Since no effect was observed when only the free amino acids were added, it is considered that the effect was brought about by the combination of the free amino acids and a specific peptide fraction.

### (Examples 6 to 9) Use of other plant-based milks and addition of oil or fat

Fermented soy milks were prepared in the same manner as in Comparative Example 1 by using the blending of Comparative Example 1 as a base, and using other plant-based milks as a fermentation raw material or adding a plant oil or fat, and the effect of the addition of each hydrolyzate was checked. The blending amounts of the respective components are as shown in Table 4.

The effect of the addition was also evaluated in the same manner as in Tables 2 and 3.

**(Table 4)**

| | | Example 6 | Example 7 | Example 8 | Example 9 |
|---|---|---|---|---|---|
| Soy milk cream | | - | - | - | 83.69 |
| Plain soy milk | | 98.89 | - | - | - |
| Coconut milk | | - | 98.94 | - | - |
| Rice milk | | - | - | 98.84 | - |
| Soybean oil | | - | - | - | 15 |
| Glucose | | 1 | 1 | 1 | 1 |
| HINUTE-HKB | | 0.1 | 0.05 | 0.15 | 0.3 |
| Lactic acid bacteria | | 0.01 | 0.01 | 0.01 | 0.01 |
| Total | | 100 | 100 | 100 | 100 |
| Solid content of fermentation raw material (in whole) | | 10.20 | 4.84 | 14.69 | 32.87 |
| Content of protein hydrolyzate (% in solid content) | | 0.981 | 1.033 | 1.021 | 0.913 |
| Lipid | In whole | 3.16 | 0.89 | 1.28 | 25.29 |
| | In solid content | 31.03 | 18.40 | 8.75 | 76.95 |
| Sensory evaluation | After storage for 1 day at 5°C | 5 | 5 | 5 | 4 |
| | After storage for 7 days at 5°C | 5 | 5 | 5 | 4 |

| | | | | | |
|---|---|---|---|---|---|
| * Plain soy milk (Marusanai Co., Ltd., solid content of 9.2%, lipid content of 3.2%) * Coconut milk (Alpro, solid content of 3.8%, lipid content of 0.9%) * Rice milk (Alpro, solid content of 13.7%, lipid content of 1.3%) | | | | | |

### (Consideration)

In light of the results in Table 4, adding, as a fermentation raw material, a specific amount of a protein hydrolyzate containing a relatively large amount of the free amino acids can suppress deterioration in the flavor of the plant-based fermented milk during fermentation and during storage after fermentation, even in the other plant-based milks, or the fermentation raw material to which a plant oil or fat was added.

### (Example 12 and Comparative Example 8) Fermentation with yeast

The blending of Example 1 and Comparative Example 1 was used as a base, Saccharomyces cerevisiae and Kluyveromyces marxianus were added as yeast instead of lactic acid bacteria, and aerobic fermentation (shaking culture) was performed at 25°C for 72 hours. After the fermentation was completed, the resultant was sterilized at 80°C for 2 minutes to obtain a yeast-fermented soy milk. The effect of the addition was also evaluated in the same manner as in Tables 2 and 3.

**(Table 5)**

| | | Comparative Example 8 | Example 12 |
|---|---|---|---|
| Soy milk cream | | 98.99 | 98.79 |
| Glucose | | 1 | 1 |
| HINUTE-HKB | | - | 0.2 |
| Yeast | | 0.01 | 0.01 |
| Total | | 100 | 100 |
| Solid content of fermentation raw material (in whole) | | 20.60 | 20.76 |
| Content of protein hydrolyzate (% in solid content) | | 0 | 0.963 |
| Lipid | In whole | 12.18 | 12.15 |
| | In solid content | 59.10 | 58.53 |
| Sensory evaluation | After storage for 1 day at 5°C | 1 | 5 |
| | After storage for 7 days at 5°C | 1 | 5 |

### (Consideration)

In light of the results in Table 5, even when yeast was used as a microorganism and aerobic fermentation was performed, adding, as a fermentation raw material, a specific amount of a protein hydrolyzate containing a relatively large amount of the free amino acids can suppress deterioration in the flavor of the plant-based fermented milk during fermentation and during storage after fermentation.

### (Example 13) Fermentation with diacetyl-producing lactic acid bacteria

The blending of Example 1 was used as a base, 0.01 parts of diacetyl-producing lactic acid bacteria (Lactococcus lactis subspecies lactis biovar diacetylactis) were added instead of the lactic acid bacteria used in Example 1, and lactic acid fermentation was performed at 24°C until the pH was lowered to 4.8. After the fermentation was completed, the resultant was stirred, and sterilized at 80°C for 2 minutes to obtain a pasty fermented soy milk. The effect of the addition was also evaluated in the same manner as in Tables 2 and 3.

**(Table 6)**

| | | Example 13 |
|---|---|---|
| Soy milk cream | | 98.79 |
| Glucose | | 1 |
| HINUTE-HKB | | 0.2 |
| Lactic acid bacteria | | 0.01 |
| Total | | 100 |
| Solid content of fermentation raw material (in whole) | | 20.76 |
| Content of protein hydrolyzate (% in solid content) | | 0.963 |
| Lipid | In whole | 12.15 |
| | In solid content | 58.53 |
| Sensory evaluation | After storage for 1 day at 5°C | 5 |
| | After storage for 7 days at 5°C | 5 |

### (Consideration)

In light of the results in Table 6, even when diacetyl-producing lactic acid bacteria were used as lactic acid bacteria, adding, as a fermentation raw material, a specific amount of a protein hydrolyzate containing a relatively large amount of the free amino acids can suppress deterioration in the flavor of the plant-based fermented milk during fermentation and during storage after fermentation. Since diacetyl is a component contained in fermented butter or cheese of milk, the obtained fermented soy milk is considered to be useful as a raw material for plant-based butter or cheese.

### (Example 14) Application to plant-based butter

An aqueous phase was obtained by adding 2.4 parts of rock salt to 300 parts of the fermented soy milk (liquid temperature of 40°C) obtained in Example 1. While stirring the aqueous phase with a hand mixer, 450 parts of coconut oil having a rising melting point of about 25°C was heated to 40°C and melted, and gradually added, thereby preparing an emulsified liquid.

The obtained emulsified liquid was cooled overnight in a refrigerator at 4°C to obtain plant-based butter. The obtained plant-based butter had a very favorable flavor without any deteriorated odor.

### (Example 15) Application to plant-based creams

0.4 parts of an emulsifier was added to 20 parts of a fractionated palm oil or fat (rising melting point of 26°C) and 9 parts of a lauric oil or fat (palm kernel oil/rising melting point of 28°C), and these components were mixed and dissolved to prepare an oil phase.

5 parts of the fermented soy milk (liquid temperature of 40°C) obtained in Example 1 was added to 25.7 parts of water and 40 parts of plain soy milk while stirring with a homomixer, and these components were mixed and dissolved to prepare an aqueous phase.

The prepared oil phase and aqueous phase were stirred at 65°C for 30 minutes with a homomixer, and preliminarily emulsified, a sterilization treatment was then performed by a direct heating method at 144°C for 4 seconds with an ultra-high temperature sterilizer (manufactured by IWAI KIKAI KOGYO CO., LTD.), and the resultant was homogenized at a homogenization pressure of 45 kg/cm² and immediately cooled to 5°C. After the cooling, the resultant was aged for about 24 hours to obtain plant-based creams.

1 kg of the obtained foamable oil-in-water type emulsion was whipped in a Hobart mixer (MODEL N-5 manufactured by HOBART CORPORATION) at third speed (300 rpm) until the maximum foaming state was reached, and the flavor was checked.

The obtained plant-based creams in a foamed state had a very favorable flavor without any deteriorated odor.

## Claims

1. A method for producing a plant-based fermented milk, the method comprising:
adding a protein hydrolyzate containing at least 3% by weight and at most 35% by weight of free amino acids to a mixture containing a plant-based milk and a lipid, so that the resulting mixture containing the protein hydrolyzate, the plant-based milk and the lipid is used as a raw material, wherein the protein hydrolyzate is contained in an amount of 0.1 to 2% by weight with respect to the solid content of the raw material, and the content of the free amino acids is calculated by liquid chromatography-mass spectrometry, and wherein the lipid is derived from the plant-based milk, or an oil or fat added separately from the plant-based milk; and
subjecting the raw material to fermentation.

2. The production method according to claim 1,
wherein the lipid content in the raw material is 5 to 80% by weight in the solid content.

3. The production method according to claim 1 or 2,
wherein the fermentation is lactic acid fermentation.

4. The production method according to claim 1 or 2,
wherein the fermentation is yeast fermentation.

5. The production method according to claim 1 or 2,
wherein the fermentation is a fermentation using diacetyl-producing bacteria.

## Patentansprüche

1. Verfahren zur Herstellung einer pflanzenbasierten fermentierten Milch, wobei das Verfahren umfasst:
Zugabe eines Proteinhydrolysats, das mindestens 3 Gew.-% und höchstens 35 Gew.- % freie Aminosäuren enthält, zu einer Mischung, die eine pflanzenbasierte Milch und ein Lipid enthält, so dass die resultierende Mischung, die das Proteinhydrolysat, die pflanzenbasierte Milch und das Lipid enthält, als Rohmaterial verwendet wird, wobei das Proteinhydrolysat in einer Menge von 0,1 bis 2 Gew.-% bezogen auf den Feststoffgehalt des Rohmaterials enthalten ist und der Gehalt an freien Aminosäuren durch Flüssigchromatographie-Massenspektrometrie berechnet wird, und wobei das Lipid aus der pflanzenbasierten Milch stammt oder ein Öl oder Fett ist, das getrennt von der pflanzenbasierten Milch zugegeben wird; und
Unterziehen des Rohmaterials einer Fermentation.

2. Herstellungsverfahren nach Anspruch 1,
wobei der Lipidgehalt in dem Rohmaterial 5 bis 80 Gew.-% des Feststoffgehalts ausmacht.

3. Herstellungsverfahren nach Anspruch 1 oder 2,
wobei die Fermentation eine Milchsäurefermentation ist.

4. Herstellungsverfahren nach Anspruch 1 oder 2,
wobei die Fermentation eine Hefefermentation ist.

5. Herstellungsverfahren nach Anspruch 1 oder 2,
wobei die Fermentation eine Fermentation unter Verwendung von diacetylproduzierenden Bakterien ist.

## Revendications

1. Procédé de production d'un lait fermenté à base végétale, le procédé comprenant :
l'ajout d'un hydrolysat de protéines contenant au moins 3 % en poids et au plus 35 % en poids d'acides aminés libres à un mélange contenant un lait à base végétale et un lipide, de sorte que le mélange résultant contenant l'hydrolysat de protéines, le lait végétal et le lipide est utilisé comme matière première, dans lequel l'hydrolysat de protéines est contenu en une quantité de 0,1 à 2 % en poids par rapport à la teneur en solides de la matière première, et la teneur en acides aminés libres est calculée par chromatographie liquide-spectrométrie de masse, et dans lequel le lipide est dérivé du lait végétal, ou d'une huile ou d'une graisse ajoutée séparément du lait végétal ; et
soumettre la matière première à une fermentation.

2. Procédé de production selon la revendication 1,
dans lequel la teneur en lipides dans la matière première est comprise entre 5 et 80 % en poids de la teneur en solides.

3. Procédé de production selon la revendication 1 ou 2,
dans lequel la fermentation est une fermentation lactique.

4. Procédé de production selon la revendication 1 ou 2,
dans lequel la fermentation est une fermentation à la levure.

5. Procédé de production selon la revendication 1 ou 2,
dans lequel la fermentation est une fermentation utilisant des bactéries productrices de diacétyle.
